(19) Europäisches Patentamt
European Patent Office
Office européen des brevets

(11) **EP 2 325 148 A1**

(12) **EUROPÄISCHE PATENTANMELDUNG**

(43) Veröffentlichungstag:
**25.05.2011 Patentblatt 2011/21**

(51) Int Cl.:
**C04B 16/06** (2006.01)    **C04B 20/00** (2006.01)
**E04C 2/16** (2006.01)

(21) Anmeldenummer: **10192044.5**

(22) Anmeldetag: **22.11.2010**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **20.11.2009  AT 18482009**

(71) Anmelder:
• **Technische Universität Wien**
  **1040 Wien (AT)**
• **Reinthaller, Christian**
  **1190 Wien (AT)**

(72) Erfinder:
• **Reinthaller, Christian**
  **1190, WIEN (AT)**
• **Bartl, Andreas**
  **1180, Wien (AT)**
• **Marini, Ingo**
  **7571, RUDERSDORF (AT)**
• **Haner, Aliye Sebnem**
  **1030, WIEN (AT)**

(74) Vertreter: **Babeluk, Michael**
  **Patentanwalt**
  **Mariahilfer Gürtel 39/17**
  **1150 Wien (AT)**

(54) **Zuschlagstoff für die Herstellung von Baumaterialien**

(57)    Die Erfindung betrifft einen Zuschlagstoff für die Herstellung von Baumaterialien, insbesondere von von Kunststoff-gebundenen Formteilen, enthaltend zumindest eine faserhaltige Altstofffraktion. Hochwertige Endprodukte können dadurch erreicht werden, dass die zumindest eine Altstofffraktion ein Massenverhältnis von hydrophoben zu hydrophilen Textilfasern von 1:4 bis 4:1, vorzugsweise 1:3 bis 2:1 aufweist.

Weiters betrifft die Erfindung ein Verfahren zur Herstellung eines oben beschriebenen Zuschlagstoffes.

Fig. 1

EP 2 325 148 A1

**Beschreibung**

Die Erfindung betrifft einen Zuschlagstoff für die Herstellung von Baumaterialien, insbesondere von Kunststoff-gebundenen Formteilen gemäß dem Oberbegriff von Patentanspruch 1.

Insbesondere geht die Erfindung von einem Zuschlagstoff aus, der zumindest eine faserhaltige Altstofffraktion enthält. In weiterer Folge betrifft die Erfindung auch ein Verfahren zur Herstellung dieses Zuschlagsstoffes und dessen Verwendung.

Weltweit werden heute mehr als 70 Millionen t Fasern produziert, die für verschiedene Anwendungen zum Einsatz kommen. Der größte Anteil der Fasern wird zu Textilien aber auch zu Vliesstoffen verarbeitet, die dann für Bekleidung oder Heimtextilien eingesetzt werden. Analog zu den Produktionszahlen fällt eine etwa gleich große Menge an Abfallfasern an. Vielfach erfolgt in vielen Ländern, besonders in der Europäischen Union, eine getrennte Sammlung von Alttextilien. Die gesammelte Ware wird anschließend sortiert und in verschiedene Fraktionen getrennt. Die interessanteste Fraktion stellen hochwertige Altbekleidungen oder Haushaltstextilien dar, die über Secondhand Geschäfte im Inland vertrieben werden oder als Kleiderspenden in Entwicklungs- und Schwellenländer zum Einsatz kommen. Diese Verwertungsschiene ist nicht nur ökonomisch interessant, sondern kann stellt auch hinsichtlich Umweltschutz die beste Option dar. Durch eine Wiederverwendung der textilen Produkte können Ressourcen und Energie bestmöglich geschont werden. Allerdings ist nur ein Teil der gesammelten Textilien als Secondhand Ware zu verwenden und der übrige Anteil muss anderwärtig verwertet oder entsorgt werden. Im Vergleich zur Wiederverwendung als Secondhand Ware sind diese Verwertungsmöglichkeiten ökologisch und ökonomisch weniger vorteilhaft. Zum Teil verursacht die Entsorgung sogar hohe Kosten, die durch den Überschuss der Secondhand Ware subventioniert werden muss.

In letzter Zeit hat sich die ökonomische Situation der Sammel- und Sortierbetriebe im Bereich Altbekleidung dramatisch verschlechtert. Zum einen haben sich die Kosten für die Entsorgung vervielfacht. Konnten vor einigen Jahren noch unbrauchbare Alttextilien kostengünstig (ca. EUR 5,--/t) deponiert werden, so müssen diese heute aufgrund des Deponieverbotes in Österreich und Deutschland thermisch entsorgt werden. Für die Verbrennung sind Kosten von bis zu EUR 200,--/t zu veranschlagen. Zum anderen sinkt der Anteil an qualitativ hochwertiger Bekleidung kontinuierlich. Nicht zuletzt aufgrund des Wegfalles der Handelbeschränkungen kommen in Europa verstärkt billige, qualitativ minderwertige Bekleidungen aus Asien auf den Markt. Die Altkleidersammelbetriebe müssen daher eine immer größer werdende Fraktion zu immer höheren Kosten entsorgen. Die Finanzierbarkeit der aus ökologischer und sozialer Sicht vorteilhaften Altkleidersammlung ist daher gefährdet und in letzter Zeit gibt es daher Bestrebungen, auch für die Fraktionen, die sich nicht zur Wiederverwendung eignen, ökonomisch vorteilhafte Verfahren zu entwickeln.

In den meisten Fällen erfolgt eine Zerkleinerung der Alttextilien, die auf Verfahren gemäß dem Stand der Technik basieren. Beispielsweise werden in der US 7 386 919 B2 oder der GB 2 453 656 A Verfahren beschrieben, die Alttextilien zum weiteren Recycling aufbereiten.

Neben der Zerkleinerung ist auch die Trennung von textilen und nicht-textilen Komponenten Stand der Technik. So beschreibt beispielsweise die DE 101 07 541 C1, dass textile Beläge in Faser- und Nichtfaseranteile getrennt werden können.

Auch wenn die Aufbereitung von Alttextilien, die mittels Zerkleinerung, Trennen, Mahlen oder anderen Verfahren durchgeführt wird, bekannt ist, so ist eine sinnvolle Verwendung des aufbereiteten Materials noch nicht zufrieden stellend gelöst.

Im Stand der Technik sind Verfahren zur Herstellung von hochfesten Bauelementen, insbesondere Bauplatten, wie beispielsweise in der AT 254 025 beschrieben, bekannt geworden, wobei einer Grundstoffmischung aus einem hydraulischen Bindemittel und leichtgewichtigen Zuschlagsstoffen, insbesondere pflanzliches Material oder Schaumkunststoff, zusätzlich Fasern aus synthetischen, organischen Kunststoffen beigefügt werden. Diese Textilfasern sind beispielsweise Abfälle aus der Verarbeitung von Garnen, sowie Textilfabrikskehricht.

In der DE 38 16 894 A1 wird ein Verfahren und eine Vorrichtung zur Herstellung von Bauelementen aus textilem Teppich-Abfallmaterial beschrieben, das in Schnitzel zerteilt granuliert und mit als Bindemittel fungierenden Polyurethan versehen wird.

In der DE 297 15 423 U1 wird eine Deck- und Tragschicht für Wege mit geringer Belastung offenbart, wobei der Beton neben mineralischen Zuschlagsstoffe sowie Wasser und Zement zusätzlich Textilschnitzel enthält.

Im International Journal of Polymeric Materials, Jahrgang 57/8 aus 2008, Seite 797 bis 805 von M. Tasedemir, D. Kocak, I. Usta, M. Akalin, N. Merdan "Properties of recycled polycarbonate/waste silk and cotton fiber polymer composites" werden unterschiedliche Textilfasern in Polymermatricen untersucht, wobei insbesondere Mischungen aus Polyethylen/Polypolen mit Cellulose bzw. Seidenfasern beschrieben werden.

In der DE 296 05 878 U1 werden wiederum plattenförmige Elemente aus textilen Abfällen als Dämmstoffe beschrieben.

In der DE 197 14 348 C2 werden textile Abfälle zu Textilschnitzeln geschnitten und mittels eines Binders zu Dämmstoffen verarbeitet.

Der Einsatz von Textilschnitzeln aus Abfällen zur Herstellung von Trag- und Deckschichten wurde bereits 1981 in der DD 145 772 A beschrieben.

In der DE 41 41 524 C1 wird ein Faserbaumaterial beschrieben, das Alttextilien nicht in Form von Textilschnitzeln, sondern in Form von Einzelfasern enthält, beschrieben. Ein Nachteil des beschriebenen Verfahrens liegt darin, dass die Matrix schon beim Mahlvorgang mit dem Fasermaterial gemischt werden muss. Es steht jedoch eine Vielzahl an potentiellen Matrixmaterialen zur Verfügung. Durch die Notwendigkeit bereits beim Aufbereitungsvorgang das endgültige Matrixmaterial zu wählen, ist dieses Verfahren sehr unflexibel. Ein weiterer Nachteil des Verfahrens ist die Tatsache, dass das Material hochbauschig vorliegt, was Transport, Dosierbarkeit oder andere Weiterverarbeitungsschritte erschwert.

In der US 5,369,861 A bzw. US 5,471,72 A wird ein Verfahren zum Recycling von Denim Abfällen beschrieben. Dabei wird das Textil geöffnet und aus den gewonnenen Fasern können wiederum Textilien hergestellt werden. Ebenso können, wie in der US 5,919,717 A offen gelegt, Polyestertextilabfälle zu Rycyclingzwirnen oder -vliesstoffen verarbeitet werden. Ein Nachteil der beschrieben Verfahren liegt darin, dass nur reine Abfälle verarbeitet werden können, was in der Praxis nur selten der Fall ist. Zumeist werden Alttextilien oder aus unterschiedlichen Materialien beim Sammelvorgang vermischt oder es sind schon an sich Textilien, die aus mehreren Fasertypen, insbesondere aus Zellulose oder aus synthetischen Polymeren.

Es ist daher Aufgabe der Erfindung, die oben genannten Nachteile des Stands der Technik zu beseitigen. Insbesondere sollen die mechanischen Eigenschaften der Endprodukte, also von Baustoffen und dgl. optimiert werden.

Erfindungsgemäß werden diese Aufgaben gemäß Patentanspruch 1 dadurch gelöst, dass ein Zuschlagsstoff, der zumindest eine Altstofffraktion enthält, ein Massenverhältnis von hydrophoben zu hydrophilen Textilfasern von 1:4 bis 4:1, vorzugsweise 1:3 bis 2:1 aufweist.

Als Zuschlagstoff im Sinn der Erfindung wird die oben beschriebene Faserfraktion verstanden, die beispielsweise in einer Kunststoff-Matrix aufgenommen ist. Je nach Anwendungsgebiet können weitere Zuschlagstoff, wie etwa Füllmaterialien oder dgl. vorliegen.

Je nach Einsatzzweck können hohe Faseranteile, wie etwa bis zu 95% Fasern in einem Formteil mit Polyethylen-Matrix eingesetzt werden. Es sind aber auch geringe Faseranteile in einem Bereich von etwa 5% möglich, wenn dies von der Anwendung her erforderlich ist.

Im Rahmen der Kunststoff-Matrix kann insbesondere IDPE (low-density Polyethylene) eingesetzt werden.

Überraschenderweise hat sich herausgestellt, dass sich durch die Kombination von hydrophilen und hydrophoben Faseranteilen in einem bestimmten Verhältnis besonders vorteilhafte Eigenschaften des Endprodukts erzielen lassen.

In der Folge wird die Herstellung des erfindungsgemäßen Zuschlagsstoffs anhand der beigefügten Figuren näher erläutert. Es zeigen:

Fig. 1    ein grobes Verfahrensschema der erfindungsgemäßen Aufberei- tung;

Fig. 2    die Aufbereitung von textilen Abfällen (Beispiel 1);

Fig. 3    ein Beispiel für die Zusammensetzung des erfindungsgemäßen Zu- schlagsstoffes nach Fasertypen sowie deren Wasserrückhaltever- mögen (WRV);

Fig. 4    Faserdurchmesser des erfindungsgemäßen Zuschlagsstoffes;

Fig. 5    Faserlänge des erfindungsgemäßen Zuschlagsstoffes;

In einem ersten Schritt werden faserhältige Abfallprodukte, je nach Beschaffenheit, mechanisch aufbereitet. Ein Vorteil der Erfindung liegt darin, dass eine Vielzahl von faserhältigen Abfallprodukten verwendet werden kann. Vor allem Altbekleidungen, sowohl Ober- als auch Unterbekleidung, Heimtextilien wie etwa Decken, Bettwäsche, Tischwäsche, Gardinen oder Vorhänge aber auch andere Textilien oder Vliesstoffe stellen ideale Ausgangsprodukte für das erfindungsgemäße Verfahren dar. Es können aber auch andere Abfälle verarbeitet werden, wenn diese einen ausreichend hohen Faseranteil aufweisen. Besonders Vorteilhaft können Produktionsabfälle, die im Zuge der Herstellung und Verarbeitung von Textilien oder Vliesstoffen anfallen, aufbereitet werden, da diese keine Fremdstoffe enthalten und zumeist ausschließlich aus Fasern bestehen. Weiters können auch Fasern aus Faserverbundstoffen, wie etwa Altreifen, als Ausgangsmaterial für den erfindungsgemäßen Zuschlagstoff zum Einsatz kommen.

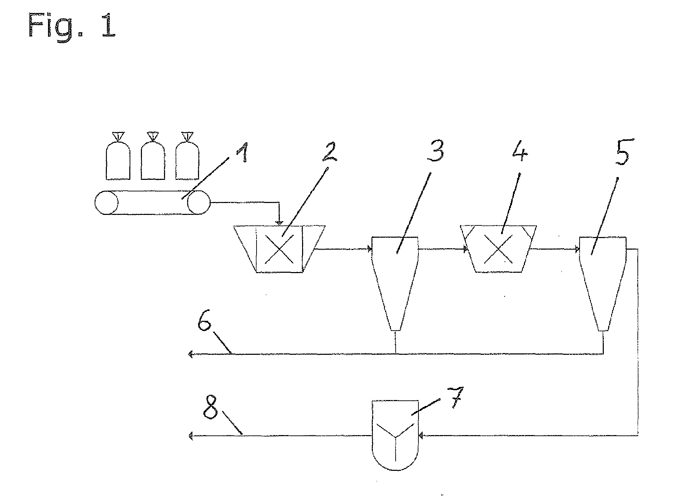

Bei der erfindungsgemäßen Aufbereitung kommen ausschließlich mechanische Verfahren wie Schneidmahlung, Aeroklassieren oder Granulieren zum Einsatz, bei denen keine nennenswerten festen, flüssigen oder gasförmigen Abfälle generiert werden. Fig. 1 zeigt ein grobes Schema, wie die Aufbereitung der faserhältigen Abfälle erfolgen kann. Die bei 1 aufgegebenen Abfälle werden in einem ersten Schritt 2 zumeist vorzerkleinert. Die Vorzerkleinerung 2 kann unterbleiben, wenn die Abfälle bereits relativ fein sind und direkt dem ersten Trennschritt bzw. der Feinzerkleinerung zugeführt werden können. Häufig muss mit nicht-fasrigen Begleitstoffen gerechnet werden, die die Aufbereitung erschweren. Beispielsweise muss bei der Aufbereitung von Abfällen aus der Altkleidersammlung mit zahlreichen Komponenten gerechnet werden, die nicht aus Fasern bestehen und teilweise die Verwendung bestimmter Aggregate verunmöglichen. Wie in Tabelle 1 ersichtlich, sind vor allem harte Bestandteile von Kleidungsstücken oder auch in der Bekleidung vorhandene Fremdstoffe für schnell laufende Maschinen problematisch. Als geeignete Aggregate sind daher vorzugsweise langsam laufende Universalzerkleinerungsmaschinen mit ein bis vier Wellen, Walzenbrecher, Shredder oder Maschinen ähnlicher Bauart sowie Kombinationen aus den erwähnten Maschinen einzusetzen. Derartige Maschinen eignen sich auch zum Zerkleinern von Verbundstoffen, wie etwa Altreifen. Es können jedoch auch andere Maschinen und Anlagen gemäß dem Stand der Technik verwendet werden.

Tabelle 1 Mögliche Komponenten, die Alttextilien enthalten können (Auswahl).

| Nicht-Gewebeanteile | | Fremdstoffe |
|---|---|---|
| "weich" | "hart" | |
| Folien | Schnallen | Feuerzeug |
| Leder | Knöpfe | Kugelschreiber |
| Daunen | Zipp-Verschlüsse | Taschenmesser |

Nach dieser Vorzerkleinerung 2 erfolgt, wenn notwendig, bei 3 eine Abtrennung von nicht-fasrigen Komponenten. Dabei ist vor allem eine Abtrennung von Metallen oder Mineralien erforderlich. Bei Abfällen, die ausschließlich aus Fasern bestehen, wie etwa bei Produktionsabfällen, kann dieser Schritt natürlich entfallen. Gemäß dem Stand der Technik kann in einem ersten Schritt ein Magnetabscheider zur Abtrennung von Eisenmetallen zum Einsatz kommen. Danach erfolgt die Abtrennung von Nicht-Eisenmetallen durch einen Wirbelstromabscheider. In einem weiteren Schritt 5 können die nichtmetallischen und nichtfasrigen Komponenten entfernt werden und bei 6 abgeführt werden. Gemäß dem Stand der Technik werden dafür beispielsweise Windsichter, Luftherde, Siebe oder Luftstrahlsiebe vorteilhaft eingesetzt. Nach diesem Schritt liegt eine faserhältige Fraktion vor, die weitgehend von nicht fasrigen Komponenten befreit ist und primär aus Textil- oder Vliesstoffschnitzel besteht und Einzelfasern nur zu einem geringen Anteil enthält.

Wie in der Fig. 1 gezeigt, werden die faserhältigen Abfälle in einem weiteren Schritt 4 fein zerkleinert. In diesem Schritt 4 werden alle textilen Flächengebilde und auch Vliesstoffe zerstört und es wird eine weitgehend aus vereinzelten Kurzfasern bestehende Fraktion erhalten. Gemäß dem Stand der Technik werden für diesen Prozessschritt verschiedene Bauarten von Feinschneidmühlen verwendet.

Gegebenenfalls kann diesem Feinschneidprozess noch ein weiterer Trennschritt (Trennschritt 2) folgen. Dabei können ähnliche Aggregate wie bei Trennschritt 1 zum Einsatz kommen. Aufgrund der Feinheit des Produktes können auch Fein- und Feinstsichter, wie beispielsweise ein Abweiseradsichter, vorteilhaft eingesetzt werden. Neben einer Abtrennung von Metallresten (Eisen und Nicht-Eisenmetalle), Mineralien, nicht faserförmige Kunststoffe können bei Bedarf auch Reste von Garnen, Zwirnen, Fäden sowie Textil- und Vliesstoffschnitzel entfernt werden.

Der durch die beschriebenen Verfahren erhaltene, weitgehend rieselfähige Zuschlagstoff kann gegebenenfalls in einem weiteren Prozessschritt 7 noch konfektioniert werden. Darunter versteht sich die Vorbereitung des Zuschlagstoffes für die anschließende Anwendung. Beispielsweise kann eine Granulierung oder auch der Zusatz von Hilfsmitteln erfolgen. Wesentlich in Zusammenhang mit der Erfindung ist, dass der Zuschlagstoff rieselfähig ist, d.h., dass die Fasern nicht verfilzt sind oder watteartige Strukturen bilden, da dies die weitere Verwendung wesentlich beeinträchtigen würde. Der bei Prozessschritt 8 hergestellte Zuschlagstoff kann schließlich bis zu seiner endgültigen Verwendung gelagert werden.

Eine weitere Variante besteht darin ein so genanntes Masterbatch herzustellen. Darunter versteht man ein Additiv in Form von Granulaten mit einem Gehalt des erfindungsgemäßen Zuschlagsstoffes, der höher ist als in der Endanwendung. Masterbatches erhöhen dabei im Vergleich zu Pasten, Pulver oder flüssigen Zusatzstoffen die Prozesssicherheit und sind sehr gut zu verarbeiten.

Vorzugsweise erfolgt eine baldige Weiterverarbeitung des erfindungsgemäßen Zuschlagsstoffes zu einem Formteil. Darunter versteht man Kunststoff gebundene Teile wie Platten, Panelen, Kompaktplatten, Mehrschicht-Verbundplatten für Wand- und Deckenbekleidungen für Innen- und Außenanwendung. Weiters fallen darunter Profile, wie C-Profile, Dachkantenprofile, Dogbones, Doppel-T-Profile, Eckprofile, Flachstäbe, Hohlstäbe, Rohre, Rundstäbe, T-Profile, U-Profile, Vierkantrohre, Vierkantstäbe, Vierkantvollstäbe, Winkelprofile, Zierleisten, Z-Profile.

Gemäß dem Stand der Technik erfolgt eine Herstellung von Faser verstärkten Platten zumeist aus Lignozellulosefasern, die aus Holz oder verholztem Pflanzenmaterial gewonnen werden. Das Rohmaterial wird mechanisch zerkleinert, gedämpft, gekocht sowie chemisch und/oder mechanisch aufgeschlossen, um schließlich Einzelfasern, Faserbündel oder Faserbruchstücke zu erhalten. Holz, vor allem aus nativem Ursprung stellt das häufigste Fasermaterial dar. Es können aber auch Altholz oder Hanf, aber auch Biertreber, Kenaffasern oder Sonnenblumenstängel zum Einsatz kommen. Gemäß dem Stand der Technik erfolgt die Herstellung gemäß dem Naß-, Trocken- oder Halbtrockenverfahren.

Als Nachteilig an dem bisherigen Stand der Technik ist die Tatsache, dass die Gewinnung der Lignozellulosefasern sehr energieaufwändig ist. Weiters stellt Holz zwar einen nachwachsenden Rohstoff dar, jedoch müssen neue Materialien eingesetzt werden. Durch Verwendung des erfindungsgemäßen Zuschlagsstoffes zur Herstellung von Kunststoff gebundenen Formteilen kann einerseits ein bislang als Abfall eingestuftes Produkt verwendet werden und zusätzlich eine große Menge an Energie zum Aufschließen der Lignozellulosefasern eingespart werden. Da der erfindungsgemäße Zuschlagsstoff trocken vorliegt, so erfolgt eine Herstellung der Formbauteil vorzugsweise gemäß dem Trockenverfahren, es kann aber auch Naß- oder Halbtrockenverfahren zum Einsatz kommen.

Auch wenn die aus dem erfindungsgemäßen Zuschlagsstoff hergestellten Platten nicht unter die üblichen Normen, wie die EN 428-4:2005 oder EN 316:2009, fallen (keine Lignozellulosefasern) fallen, so können diese Normen sinngemäß angewandt werden. Im Falle der Herstellung von Platten können diese sowohl als harte Platten (Dichte $\geq$ 900 kg/m$^3$), als mittelharte Platten (Dichte $\geq$ 400 kg/m$^3$ bis < 900 kg/m$^3$) als auch als poröse Platten (Dichte $\geq$ 230 kg/m$^3$ bis < 400 kg/m$^3$) in Anlehnung an die DIN EN 316 gefertigt werden.

Neben den erwähnten Platten und Profilen, die primär für nicht tragende Konstruktionen, etwa zum Zwecke der Gestaltung, des Schallschutzes, des Brandschutzes oder des Sichtschutzes, zum Einsatz kommen, können vorzugsweise auch statisch mitwirkende Bauteile daraus gefertigt werden. Darunter fallen alle Arten von Ziegel wie Deckenhohlziegel oder Leichtlanglochziegel. Die Verbindung zwischen den Ziegelelementen erfolgt vorzugsweise durch Stecksysteme oder Klebern.

Bei der Verarbeitung von textilen Abfallprodukten, wie Altbekleidungen, Produktionsabfällen oder dergleichen, wird üblicherweise eine Mischung aus unterschiedlichen Fasertypen erhalten. Eine Trennung in einzelne Fraktionen, die aus nur einer Fasertype bestehen, ist aus folgenden Gründen nicht möglich:

o Es erfolgt Vermischung von faserhältigen Abfällen bei der Sammlung. So werden etwa Altbekleidungen durch eine Containersammlung erfasst, wobei keine Differenzierung nach Fasertypen erfolgt. Eine anschließende, manuelle Trennung in unterschiedliche Fasertypen ist einerseits wirtschaftlich nicht vertretbar und andererseits praktisch nicht vollständig möglich.

o Vielfach sind Gewebe aus unterschiedlichen Fasertypen zusammengesetzt, sodass eine Trennung in die einzelnen Fasertypen allenfalls nach einer vollständigen Auflösung der textilen Struktur möglich ist. In der Praxis wäre eine derartige Trennung nicht finanzierbar, wobei selbst bei hohem Aufwand nur sehr unreine Fraktionen erhaltbar wären.

o Es ist auch üblich, dass bereits Garne aus unterschiedlichen Fasertypen zusammengesetzt sind. In diesem Fall ist eine einigermaßen ausreichende Trennung technisch nicht möglich.

Abhängig vom Fasermaterial weist eine Faser ein mehr oder weniger hydrophiles bzw. hydrophobes Verhalten auf. Der Ausdruck hydrophil stammt aus dem griechischen und bedeutet wörtlich übersetzt "wasserliebend". Im Allgemeinen wird die Bezeichnung für Verbindungen verwendet, die eine ausgeprägte Wechselwirkung mit polaren Lösemitteln, besonders Wasser, zeigen. Im Gegensatz dazu wird der Ausdruck hydrophob für eine "wasserabweisende" Eigenschaft verwendet.

Zur Beschreibung der hydrophilen Fasereigenschaften gibt es viele Möglichkeiten, und es sind zahlreiche Testmethoden entwickelt worden. Die bekanntesten hydrophilen Fasereigenschaften sind folgende:

o Wasserrückhaltevermögen:

Das Wasserrückhaltevermögen gibt an, wie viel Wasser in den Einzelfasern nach einem ausgiebigen Quellvorgang und anschließendem Abschleudern mit der 1.000fachen Erdbeschleunigung zurückgehalten wird. Es handelt sich demnach vorwiegend um Quellwasser.

o Sinkzeit:

Die Sinkzeit in Wasser ist ein Maß für die Benetzbarkeit von Einzelfasern, wobei kurze Sinkzeiten eine gute Benetzung anzeigen.

o Wasserhaltevermögen:

Das Wasserhaltevermögen erhält man, wenn man einen vollständig in Wasser untergetauchten Faserbausch definiert abtropfen lässt und anschließend auswiegt. Man hat damit ein Maß für das zwischen den Fasern festgehaltene Wasser.

o Sauggeschwindigkeit bzw. Saugkapazität:

Zur Bestimmung von Sauggeschwindigkeit und Saugkapazität lässt man die mit einem geringen Gewicht belasteten Fasern über eine Glasfritte Wasser ansaugen.

o Dickenquellung:

Die Dickenquellung ist eine einfache mikroskopische Methode.

o Wasserdampfaufnahme:

Die Wasserdampfaufnahme gibt die Menge an Wasser an, welche die Fasern im Gleichgewicht mit einer bestimmten Temperatur und einer bestimmten Feuchte aufnehmen.

Die Resultate der Tests können dabei zu durchaus unterschiedlichen Resultaten kommen. Der Vergleich der Standardfasern Baumwolle, Polyester, Viskose, Polyacryl und Polypropylen ergibt große Unterschiede für das Wasserrückhaltevermögen, die Sauggeschwindigkeit, die Saugkapazität, die Dickenquellung und die Wasserdampfaufnahme und relativ kleine Unterschiede für Sinkzeit und Wasserhaltevermögen, wie dies in Tabelle 2 dargestellt ist.

Tabelle 2 Beispiele von Materialien, die sich als Matrix für den erfindungsgemäßen Zuschlagstoff eignen.

| Fasern | WRV | SZ | WHV | SG | SK | DQ | WDA |
|---|---|---|---|---|---|---|---|
| | [%] | [s] | [g/g] | $\left[\dfrac{cm^3}{g \cdot \sqrt{s}}\right]$ | [cm³/g] | [%] | [%] |
| Viskose | 90 | 2-3 | 20 | 1,0 | 10 | 35 | 11-13 |
| Baumwolle | 45 | 2-3 | 27 | 1,2 | 12 | 25 | 7-8 |
| Polyacryl | 1 | 5 | 22 | 0 | 0 | 0 | 1-2 |
| Polyester | 0 | 2-3 | 23 | 0 | 0 | 0 | 0,5 |
| Polypropylen | 0 | 10 | 26 | 0 | 0 | 0 | 0 |

Im Folgenden wird daher, als Maß für das hydrophile Verhalten verschiedener Fasertypen oder Mischungen unterschiedlicher Typen, immer das Wasserrückhaltevermögen (WRV) verwendet. Die Bestimmung des Wasserrückhaltevermögens (WRV) erfolgt gemäß der DIN 53 814 (DIN 53814:1974-10; Prüfung von Textilien; Bestimmung des Wasserrückhaltevermögens von Fasern und Fadenabschnitten). Fasern, die ein Wasserrückhaltevermögen (WRV) unter 20% aufweisen, gelten als hydrophob, während Fasern mit einem Wasserrückhaltevermögen (WRV) von über 35% als hydrophil gelten. Fasern mit Werten zwischen diesen Wasserrückhaltevermögen liegen im Grenzbereich und weisen somit kein ausgesprochen hydrophiles bzw. hydrophobes Verhalten auf. Tabelle 3 gibt einige Beispiele von Fasern der eben erörterten Typen.

Tabelle 3. Beispiele von hydrophoben und hydrophilen Fasern sowie deren Wasserrückhaltevermögen (WRV) gemäß DIN 53 814.

| Hydrophobe Fasern | | Grenzbereich | | Hydrophile Fasern | |
|---|---|---|---|---|---|
| Faser | WRV [%] | Faser | WRV [%] | Faser | WRV [%] |
| PA6, PA6.6 | 9 - 15 | CA | 20 - 28 | CO | 45 - 50 |
| PET | 3 - 5 | PVA | 25 - 35 | CV | 82 -120 |
| EL | 7 - 11 | | | WO | 40 - 45 |
| PP, PE | 0 | | | SE | 40 - 50 |
| PAN | 4 - 12 | | | Leinen | 50 - 55 |
| CTA | 10 - 18 | | | | |

Für die nachfolgenden Berechnungsbeispiele werden die in der folgenden Tabelle 4 zusammengefassten Normalwerte verwendet.

Tabelle 4. Normalwerte für das Wasserrückhaltevermögen (WRV) verschiedener Fasern gemäß DIN 53 814.

| Faser | | WRV |
|---|---|---|
| PP | Polypropylen | 0,0 |
| PET | Polyester | 4,0 |
| PAN | Polyacryl | 8,0 |
| EL | Elastan | 9,0 |
| PA | Polyamid | 12,0 |
| CTA | Cellulosetriacetat | 14,0 |
| CA | Celluloseacetat | 24,0 |
| PVA | Polyvinylacetat | 30,0 |
| WO | Wolle | 42,5 |
| SE | Seide | 45,0 |
| CO | Baumwolle | 47,5 |
| CV | Viskose | 101,0 |

Die Hydrophilie bestimmt maßgeblich die Fasereigenschaft und in weiterer Folge das Verhalten eines Produktes, das Fasern erhält. Neben dem Fasermaterial kann das hydrophile Verhalten durch Wahl von Zusätzen, insbesondere von Avivagen, in gewünschter Weise beeinflusst werden. Hydrophile Fasern können so hydrophobiert werden und hydrophile Fasern können mittels geeigneter Avivagen hydrophilisiert werden. Je nach Art der der Anwendung kann es notwendig sein, Fasermaterial mit besonders niedriger oder mit besonders hoher Hydrophilie einzusetzen.

Überraschenderweise hat sich herausgestellt, dass es durch die geeignete Einstellung eines bestimmten Verhältnisses von hydrophoben und hydrophilen Fasern möglich ist, ein besonders hochwertiges Produkt zu erhalten. Der so eingeschlagene erfindungsgemäße Lösungsweg ermöglicht eine wesentliche Verbesserung der Qualität von Baustoffen allgemein und von Kunststoff-gebundenen Formteilen im Besonderen, wie etwa Faserverbundplatten, dreidimensionalen Formteilen, Vliesen oder dgl.

Durch die Tatsache, dass der erfindungsgemäße Zuschlagstoff sowohl hydrophobe als auch hydrophile Fasern enthält, eröffnet sich ein im Vergleich zum Stand der Technik wesentlich breiteres Einsatzspektrum. Je nach chemischer Natur des Matrixmaterials haften die hydrophoben oder die hydrophilen Faseranteil mehr oder weniger gut an der Matrix. Eine gute Haftung zwischen Faser und Matrix ist jedoch Voraussetzung für einen optimalen Verstärkungseffekt. Gleichzeitig können jedoch Fasern, die aufgrund ihrer hydrophoben bzw. hydrophilen weniger stark zum Verstärkungseffekt beitragen, einen Beitrag zur Viskositätserhöhung leisten. Der erfindungsgemäße Zuschlagstoff ist somit für nahezu alle Matrixmaterialien geeignet und kann sowohl die Viskositätseigenschaften erhöhen, als auch durch einen Faserverstärkungseffekt die mechanischen Eigenschaften verbessern.

Erfindungsgemäß weist die zumindest eine Altfaserfraktion des Zuschlagsstoffs ein Massenverhältnis von hydrophoben zu hydrophilen Textilfasern von 1:4 bis 4:1, vorzugsweise 1:3 bis 2:1 auf.

Eine quantitative Beschreibung der Hyrophilie einer Faserprobe erfolgt vorzugsweise durch die Berücksichtigung des Wasserrückhaltevermögens erfolgen, das im Bereich zwischen 5% und 100%, vorzugsweise zwischen 10% und 70% liegt.

Nachteilig dabei ist jedoch, dass nur ein Mittelwert erhalten wird. So würde das Wasserrückhaltevermögen von einer Faserprobe aus 100% Zelluloseacetat (CA) und einer Faserprobe aus 50% Polypropylen (PP) und 50% Baumwolle (CO) in beiden Fällen um 25% liegen. Naturgemäß weisen jedoch die beiden Proben ein unterschiedliches Verhalten in wässrigen bzw. nichtwässrigen Systemen auf.

Eine aussagekräftige Quantifizierung des hyrophilen Verhaltens kann grundsätzlich durch quantitative Analyse der einzelnen Fasertypen erfolgen, indem aus den Massenanteilen der Fasern aufgrund der bekannten Eigenschaften auf die Hydrophilie der Mischung rückgeschlossen wird. Eine solche Bestimmung kann mit gewissen Fehlern behaftet sein, da es an sich möglich ist, dass durch besondere Behandlung einzelne Fasern einen vom Normalwert abweichenden Wert der Hydrophilie aufweisen. Es hat sich jedoch herausgestellt, dass in der Praxis solche Effekte nur eine geringe Bedeutung haben und die beispielsweise das aus der Zusammensetzung der Mischung berechnete Wasserrückhaltevermögen relaiv gut mit dem tatsächlich gemessenen Wert übereinstimmt. Es kann aber gegebenenfalls eine gewisse Korrektur aufgrund der Messwerte erfolgen.

Tabelle 5 zeigt einige vereinfachte Beispiele von Fasermischungen und den entsprechenden Wert für das Wasserrückhaltevermögen.

Tabelle 5. Wasserrückhaltevermögen (gemäß DIN 53814) von Fasermischungen sowie die entsprechende Standardabweichung.

| Faserzusammensetzung | | Wasserrückhaltevermögens WRV [%] | |
|---|---|---|---|
| | | Mittelwert | Standardabweichung |
| 5% | PP | 96,0 | 22,0 |
| 95% | CV | | |
| 10% | PP | 90,9 | 30,3 |
| 90% | CV | | |
| 73% | PP | 27,3 | 44,8 |
| 27% | CV | | |
| 50% | PA | 27,3 | 15,3 |
| 50% | WO | | |
| 50% | PET | 25,8 | 21,8 |
| 50% | CO | | |

Die Standardabweichung $s_{WRV}$ in der obigen Tabelle 5 wird gemäß der folgenden Formal berechnet:

$$s_{WRV} = \sqrt{\sum_{i=1}^{n} \left(\overline{x} - x_i\right)^2 \cdot w_i}$$

$s_{WRV}$     Standardabweichung WRV

$\overline{x}$     Mittelwert WRV

$x_i$     WRV des i - ten Fasermaterials

$w_i$     Massenanteil des i - ten Fasermaterials

Die Standerdabweichung sollte wenn möglich mehr als 11% und insbesondere mehr als 22% betragen. Das Wasserrückhaltevermögen hat sich als sehr brauchbarer Maßstab für die Hydrophilität herausgestellt, es ist aber auch möglich das oben dargestellte Konzept eines Mindestwerts der Standardabweichung auch auf andere Messsysteme anzuwenden, beispielsweise auf die Wasserdampfaufnahme.

Durch Mischen von zwei oder mehreren Altfaserfraktionen können auch solche Fraktionen verwendet werden, die per se außerhalb des vorteilhaften Verhältnisses von hydrophoben zu hydrophilen Textilfasern liegen, bzw. außerhalb des vorteilhaften Bereiches des Wasserrückhaltevermögen. Dabei ist es unerheblich, ob die Altfaserfraktionen vor, während oder nach dem Aufbereitungsprozess gemischt werden.

Es hat sich herausgestellt, dass für den Einsatz des Zuschlagstoffes in einer Kunststoffmatrix ein Bereich zwischen 3% und 65% einzuhalten ist. Bei diesen Angaben handelt es sich um Massen-%. Als Matrix für den Zuschlagstoff kommt eine Vielzahl an Materialen in Frage. Tabelle 6 zeigt Beispiele von Materialien, die vorteilhaft als Matrix für den Zuschlagstoff verwendet werden können. Primär bewirkt der Zuschlagstoff eine Verbesserung der mechanischen Eigenschaften im Endprodukt.

Tabelle 6. Beispiele von Materialien, die sich als Matrix für den erfindungsgemäßen Zuschlagstoff eignen.

| Matrixmaterial | Beispiele |
|---|---|
| Thermoplast | Acrylnitril-Butadien-Styrol (ABS), Polyamide (PA), Polylactat (PLA), Polymethylmethacrylat (PMMA), Polycarbonat (PC), Polyethylenterephthalat (PET), Polyethylen (PE), Polypropylen (PP), Polystyrol (PS), Polyetherketon (PEEK) und Polyvinylchlorid (PVC), Ethylvinylacetat (EVA), Polypropylen (PP), Polyethylen (LDPE, HDPE, LLDPE), ... |

(fortgesetzt)

| Matrixmaterial | Beispiele |
|---|---|
| Duroplaste | Harnstoff-Formaldehydharze (UF), Melamin-Formaldehydharze (MF), Phenol-Formaldehydharze (PF), Melamin-Harnstoff-Formaldehydharze (MUF), Isocyanate (z.B. Di-phenylmethan-Isocyanat), ungesättigten Polyesterharze, Epoxidharze, Silikonharze, ... |
| Elastomere | Naturgummi, Santoprene, Styrol-Blockcopolymere, ... |
| Tierische Leime | Blutalbumin- und Gluteinleime, ... |
| Pflanzliche Leime | Stärke, Lignine, Tannine, Proteine, ... |

In einer bevorzugten Ausführung der Erfindung, beträgt die längengewichtete maximale Fasernlänge der Textilfasern 10 mm, vorzugsweise 2 mm.

Der Ausdruck Faser ist in der Fachliteratur nicht eindeutig definiert. Eine aus Sicht des wichtigsten Faserverbrauchers - die Textilindustrie - erstellte Definition (DIN 60001), bezeichnet Fasern als linienförmige Partikel, die sich textil verarbeiten lassen. Eine exakte Definition von Länge, Durchmesser und Verhältnis Länge/Durchmesser findet sich nicht. Üblicherweise werden Fasern im Längenbereich von 20 mm bis 90 mm zu Textilien versponnen. Fasern mit geringeren Längen können zu Vliesstoffen verarbeitet werden. Auch in der Papier- und Zellstoffindustrie werden faserförmige Partikel eingesetzt, wenngleich in diesem Bereich die geometrischen Abmessungen der Fasern deutlich darunter liegen.

Eine umfassendere Definition erfolgt durch die BISFA (Bureau International pour la Standardisation des Fibres Artificielles), die Faser als morphologische Bezeichnung für solche Stoffe definiert, die sich durch ihre Flexibilität, Feinheit und großes Verhältnis von Länge zu Querschnittfläche auszeichnen (BISFA; Terminology of man-made fibers, 2.000). Dadurch werden Fasern klar von Stäben (keine ausreichende Flexibilität) und Drähten (keine ausreichende Feinheit) abgegrenzt. Auch in der BISFA finden sich keine klar definierten Abmessungen bzw. Grenzwerte. Darüber hinaus spezifiziert BISFA noch folgende weiteren Begriffe:

- Fibrille: bezeichnet eine Aufgliederung einer Faser; diese kann an der Faser anhaften oder lose sein.

- Faserstaub: Fasern oder Teile von Fasern, die als Luftschwebstoff vorliegen; sie sind für das menschliche Auge als Fasern erkennbar.

- Flock: sehr kurze Fasern, die für andere Zwecke als Spinnen vorsätzlich hergestellt wurden.

- Stapelfaser: textile Faser mit endlicher Länge, die verspinnbar ist.

- Filament: Faser mit sehr großer, als unendlich angesehener Länge.

Fixe Grenzwerte für Fasergeometrien existieren bislang nur im Bereich von lungengängigen Fasern, die als die gesundheitsgefährdend eingestuft sind. Gemäß verschiedener Richtlinien (z.B. TRGS 521) werden solche Fasern als lungengängig bezeichnet, die alle drei folgenden Kriterien erfüllen:

- Die Faserlänge liegt über 5 $\mu$m.

- Der Faserdurchmesser liegt unter 3 $\mu$m.

- Das Verhältnis Faserlänge/Faserdurchmesser liegt über 3.

Da es keine verbindlichen oder genormten Vorschriften für die Bezeichnung Faser gibt, wird Faser im Zusammenhang mit dem erfindungsgemäßen Zuschlagstoff als Partikel bezeichnet, das ein Verhältnis von Länge zu Durchmesser von 10 oder darüber aufweist. Bei Fasern mit rundem oder annähernd rundem Querschnitt kann dabei der Durchmesser der Faser direkt verwendet werden. Bei Faserquerschnitten, die deutlich von einer Kreisform abweichen, ist es notwendig, den Kreisdurchmesser zu berechnen, der die gleiche Fläche aufweist, wie die Querschnittsfläche der Faser. Dabei werden nur solche Partikel als Faser betrachtet, die neben dem Verhältnis von Länge zu Durchmesser von 10 oder darüber auch einen Durchmesser im Bereich von 5 $\mu$m bis 80 $\mu$m aufweisen. Bei nicht runden Querschnitten ist der Durchmesser des dem Faserquerschnitt entsprechenden gleichflächigen Kreises heranzuziehen. Fasern mit

Durchmessern unter 5 $\mu$m sind zu vermeiden, da diese Fasern keinen positiven Effekt auf die Qualität der erfindungsgemäß gefertigten Endprodukte zeigen.

Neben der Schwierigkeit einer Definition von Fasern verursacht auch die morphologische Analyse von Fasern erhebliche Probleme. Es ist unbestreitbar, dass Systeme mit Partikeln und/oder Fasern ein disperses System darstellen, die aus einer unzählbaren Menge von einzelnen, individuellen Partikeln bestehen. Es ist daher im Bereich der mechanischen Verfahrenstechnik üblich, derartige Systeme neben der chemischen Zusammensetzung durch die Form und Größe der Partikel zu beschreiben. Da die einzelnen Partikel üblicherweise unregelmäßig geformt sind, ist es allgemein üblich, statistische Größen, wie beispielsweise Feret oder Martin Durchmesser, zu berechnen.

Für die Beschreibung von Fasern ist die Verwendung eines statistisch ermittelten mittleren Partikeldurchmessers nicht sinnvoll. Üblicherweise werden Fasern als regelmäßig geformte Partikel gesehen, die einem Zylinder entsprechen. Für eine ausreichende Beschreibung sind daher Durchmesser und Höhe des Zylinders ausreichend. Dazu kann für jeden der beiden Parameter - Faserlänge und Faserdurchmesser - ein eigener statistischer Mittelwert angegeben werden sowie gegebenenfalls jeweils eine Verteilungsdichtefunktion bzw. auch eine Verteilungssumme ermittelt werden.

Die Tatsache, dass es bei Fasern nicht sinnvoll ist, einen mittleren Durchmesser anzugeben, erschwert auch eine aussagekräftige Charakterisierung. Die meisten Analysemethoden sind für mehr oder weniger sphärische Partikel ausgelegt und große Abweichungen von der runden Form führen zu unbrauchbaren Resultaten. Dies gilt zum Beispiel für eine Siebanalyse, die gemäß dem Stand der Technik mittels Vibrationssieben oder auch mittels Luftstrahlsieb durchgeführt werden kann. Relativ lange Fasern können überhaupt nicht gesiebt werden, da die Fasern formschlüssige Agglomerate bilden. Einzelne Fasern dieser Agglomerate können dann natürlich nicht durch die Maschen des Siebes fallen, auch wenn dies geometrisch möglich wäre (d.h. Maschenweite ist größer als Faserdurchmesser). Kurze Fasern neigen weniger zu Agglomeration und können somit ein Sieb passieren, wenn der Faserdurchmesser unter der Maschenweite des Siebes liegt. Eine Faser kann jedoch nur dann das Sieb passieren, wenn die Faserachse mehr oder weniger normal zur Siebfläche ausgerichtet ist. Die Wahrscheinlichkeit einer Faserausrichtung normal zur Siebfläche durch den Energieeintrag mittels Vibration (Vibrationssieb) oder Luftbewegung (Luftstrahlsieb) ist umso höher, je kürzer die Faser ist. Die Faserlänge beeinflusst somit lediglich die notwendige Siebdauer. Auch eine dem Stand der Technik entsprechende Charakterisierungsmethode stellt die Laserbeugung dar. In diesem Fall erhält man einen mittleren Durchmesser, jedoch keinerlei Aussage über die entsprechenden Faserlängen und Faserdurchmesser.

Aus diesem Grund erfolgt eine exakte Bestimmung der Fasergeometrie mittels mikroskopischer Verfahren, bei denen eine bestimmte Anzahl von Fasern vermessen wird. So schreibt die Berufsgenossenschaftliche Zentrale für Sicherheit und Gesundheit (BGZ) ein Verfahren zur Bestimmung lungengängiger Fasern (BGI 505-31 von April 2004) vor, bei dem Fasern unter dem Lichtmikroskop gezählt werden. Derartige Verfahren sind sehr genau und können auch für Schiedsanalysen angewandt werden. Nachteilig ist jedoch ein enormer Aufwand trotz einer relativ geringen Anzahl an ausgewerteten Fasern (100 Stück).

Im Bereich der Papier- und Zellstoffindustrie wurden in letzter Zeit Geräte entwickelt, die speziell für kurze Fasern konzipiert sind und neben anderen Parametern auch die Faserlänge und den Faserdurchmesser, sowie die entsprechenden Verteilungsdichtefunktionen ermitteln können. Unter dem Namen Morfi ist ein Gerät auf dem Markt, das von der Firma TECHPAP und dem CENTRE TECH-NIQUE DU PAPIER (C.T.P.) entwickelt wurde. Die in wässriger Lösung suspendierte fasrige Probe wird durch eine Messzelle gepumpt, in der Fotos von einer Digitalkamera aufgenommen werden. Ein Softwaresystem wertet diese Bilder aus und kann Faserlängen bis zu 10 mm bestimmen. Es wurde festgestellt, dass die in dem erfindungsgemäßen Zuschlagstoff enthaltenen Fasern sehr gut mit diesem Morfi Analysesystem charakterisiert werden können. Die Probenvorbereitung und Messung erfolgt rasch und einfach und es kann in kurzer Zeit eine hohe Anzahl von Fasern vermessen werden (rund 100.000 Stück in 20 Minuten). Durch die sehr große Anzahl an Einzelfasern zeichnet sich dieses Analysesystem durch eine hohe statistische Sicherheit aus.

Wesentlich in Zusammenhang mit der Erfindung ist, dass der Zuschlagstoff rieselfähig ist, d.h., dass die Fasern nicht verfilzt sind oder watteartige Strukturen bilden, da dies die weitere Verwendung wesentlich beeinträchtigen würde.

Besonders bevorzugt bei dem erfindungsgemäßen Verfahren ist, dass sämtliche Verfahrensschritte trocken, ohne den Zusatz von Flüssigkeiten während der Herstellung des Zuschlagsstoffes durchgeführt werden. Dies hat den Vorteil, dass die Lagerfähigkeit des erfindungsgemäßen Zuschlagsstoffes signifikant erhöht wird, weil keinerlei Restfeuchte in dem erfindungsgemäßen Zuschlagstoff vorhanden ist, die beispielsweise zu Schimmelbildung oder ähnlicher Qualitätsreduktion führen könnte.

Im Folgenden wird anhand von nicht einschränkenden Ausführungsbeispielen die Erfindung näher erläutert. Beispiel 1 zeigt die Herstellung des erfindungsgemäßen Zuschlagstoffes aus unterschiedlichen Abfallströmen. Beispiel 2 und 3 erläutern eine typische Herstellung von Kunststoff gebundenen Formteilen.

Beispiel 1 (Herstellung des erfindungsgemäßen Zuschlagsstoffes)

Es wurden vier Proben von Faserabfällen zu einem erfindungsgemäßen Zuschlagstoff verarbeitet.

1. Rücknahme von Arbeitsbekleidungen

2. Faserabfälle aus der Altreifengranulierung

3. Stanzreste aus der Kleiderkonfektionierung

4. Stoffbahnreste aus der Fertigung von Vorhängen

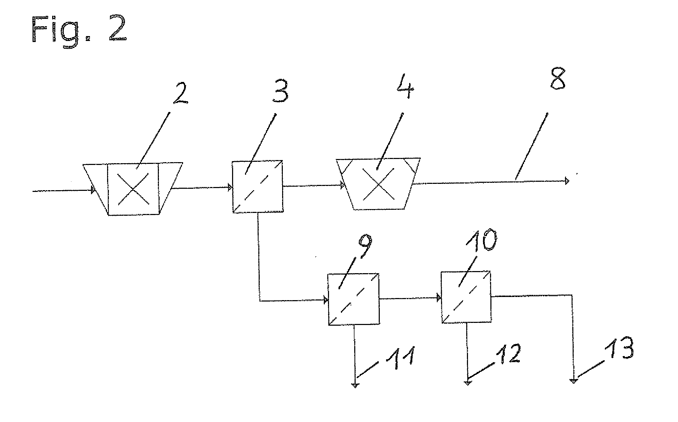

Die Aufbereitung der Abfälle erfolgte durch eine Verkettung von mechanischen Aufbereitungsaggregaten, wie in Fig. 2 gezeigt. Dazu wurde in einem ersten Schritt eine Vorzerkleinerung 2 durchgeführt, wozu ein langsam laufender Einwellenzerkleiner verwendet wurde. Die technischen Daten sind in Tabelle 8 dargestellt. Das Material wurde anschließend über einen Zick-Zack-Sichter 3 geführt und in eine Schwer- und Leichtfraktion getrennt. Die Schwerfraktion wurde noch über einen Magnetabscheider 9 und einen Wirbelstromabscheider 10 von Eisen bzw. Nicht-Eisen Metallen befreit. An 13 wurde eine metallfreie Schwerfraktion erhalten. Die bei 3 gewonnene Leichtfraktion wurde über eine Feinschneidmühle 4 zu dem erfindungsgemäßen Zuschlagsstoffes vermahlen.

Je nach Inputmaterial konnten einzelne Schritte der Aufbereitung entfallen. Tabelle 7 zeigt, welche der obigen Schritte bei den Proben 1, 2, 3 und 4 zum Einsatz kamen.

Tabelle 7. Zusammenfassung der Aufbereitungsschritte der Proben 1, 2, 3 und 4. Es wurde das in Fig. 2 dargestellte Schema verwendet.

| Probe | (2) Vorzerkleinerung | (3) Sichter | (9) Magnetabscheider | (10) Wirbelstromabscheider | (4) Feinmahlung |
|---|---|---|---|---|---|
| 1 | ja | ja | ja | ja | ja |
| 2 | nein | ja | ja | nein | ja |
| 3 | ja | nein | nein | nein | ja |
| 4 | ja | nein | nein | nein | ja |

Tabelle 8. Technische Daten des langsamlaufenden Zerkleinerungsaggregates.

| Arbeitsöffnung | mm | 540 x 1.690 |
|---|---|---|
| Einfüllvolumen | m$^3$ | 0,6 |
| Arbeitsöffnung | mm x mm | 2030 x 1650 |
| Rotorlänge | mm | 540 |
| Rotorflugkreis | mm | 282 |
| Rotordrehzahl | U/min | 58 |
| Antriebsleistung | kW | 11 |
| Sieb | mm | 40 |
| Gewicht | kg | 2.800 |

Tabelle 9. Technische Daten der Schneidmühle.

| Rotordurchmesser | mm | 600 |
|---|---|---|
| Rotorbreite | mm | 1.000 |
| Antriebsmotor | kW | 90 |
| Drehzahl | min$^{-1}$ | 1600 |
| Anzahl Rotormesser | - | 8 |
| Anzahl Statormesser | - | 6 |
| Gewicht | Kg | 4.500 |
| Siebeinsatz | mm | 0,75 |

Je nach Verunreinigung und Zusammensetzung des Ausgangsmaterials wurden unterschiedliche Anteile der Fraktionen 11, 12, 12 und 8 erhalten, die in Tabelle 10 angegeben sind.

Tabelle 10 Anteil (Massen %) der Fraktionen 11, 12, 12 und 8 aus den Proben 1, 2, 3 und 4.

| Probe | Eisen Metalle (11) | NE Metalle (12) | Abfall (13) | Faser (8) |
|---|---|---|---|---|
| 1 | 1,2 | 0,6 | 6,9 | 91,3 |
| 2 | 0,8 | - | 48,3* | 50,9 |
| 3 | - | - | - | 100 |
| 4 | - | - | - | 100 |

\* kein Abfall, sondern hochwertiges Gummimehl

Der so hergestellte Zuschlagstoff wurde anschließend chemisch und morphologisch charakterisiert. Es zeigte sich, dass die Probe aus zahlreichen Fasertypen besteht, wie in Tabelle 11 gezeigt.

Tabelle 11. Zusammensetzung des Fasermaterials in Massen %.

| | Probe 1 | Probe 2 | Probe 3 | Probe 4 |
|---|---|---|---|---|
| Acetat | 0 | 0 | 0 | 0 |
| Acryl | 0 | 0 | 0 | 0 |
| Baumwolle | 46,4 | 0 | 91,2 | 0 |
| Nylon | 9,8 | 19,6 | 0 | 0 |
| Polyester | 32,2 | 35,6 | 8,8 | 75,4 |
| Polyolefin | 1,2 | 0 | 0 | 0 |
| Seide | 0 | 0 | 0 | 0 |
| Spandex | 5,5 | 0 | 0 | 0 |
| Triacetat | 0 | 0 | 0 | 0 |
| Viskose | 4,9 | 44,8 | 0 | 24,6 |
| Wolle | 0 | 0 | 0 | 0 |

Die Altfasern setzen sich aus hydrophoben und hydrophilen Typen zusammen, wobei dieses Verhalten anhand des Wasserrückhaltevermögens beurteilt wird.

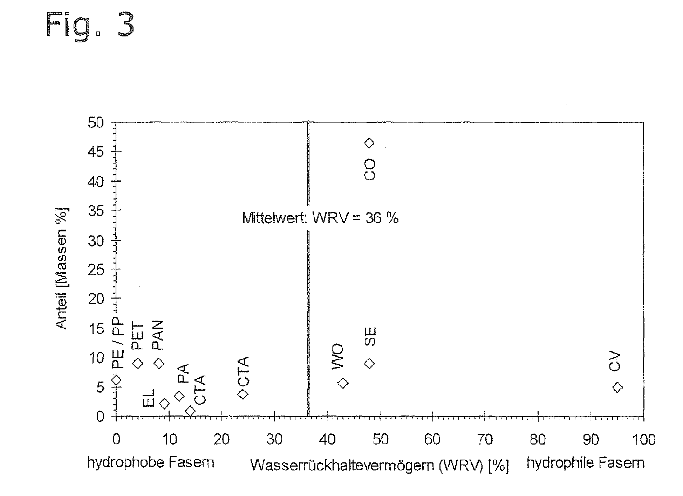

Fig. 3 zeigt beispielhaft, wie für eine Probe die Eigenschften der einzelnen Fasertypen und ihr Massenanteil in einem zweidimensionalen Diagramm dargestellt werden können.

Hinsichtlich des Wasserrückhaltevermögens sind die Fasern aus den beschriebenen Proben entweder hydrophil (Probe 2 und 3) oder befinden sich im Grenzbereich zwischen hydrophilen und hydrophoben Fasern (Probe 1 und 4). Die Proben enthalten jedoch Fasertypen mit einem Wasserrückhaltevermögen zwischen 0% (PP und PE) und 95% (CV). Eine Berechnung der Standardabweichung des Wasserrückhaltevermögens auf Basis der ermittelten Faserzusammensetzung ergibt durchwegs Werte von über 12%. Tabelle 12 zeigt die berechneten Werte für das Wasserrückhaltevermögen und die Standardabweichung des Wasserrückhaltevermögens. Diese Zusammensetzung wirkt sich positiv auf die anschließende Verwendung in Kunststoff gebundenen Formteilen aus.

Tabelle 12. Wasserrückhaltevermögen und Standardabweichung des Wasserrückhaltevermögens der Proben 1, 2, 3 und 4.

| Probe | Wasserrückhaltevermögen | |
|---|---|---|
| | Mittelwert [%] | Standardabweichung [%] |
| 1 | 29,9 | 26,0 |
| 2 | 49,0 | 46,9 |
| 3 | 44,1 | 12,3 |
| 4 | 27,9 | 41,8 |

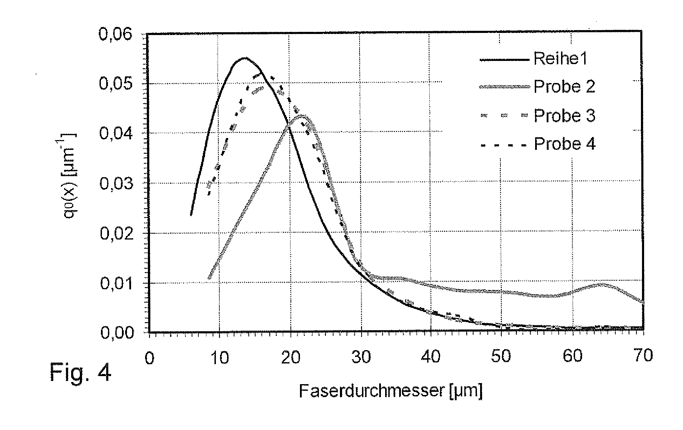

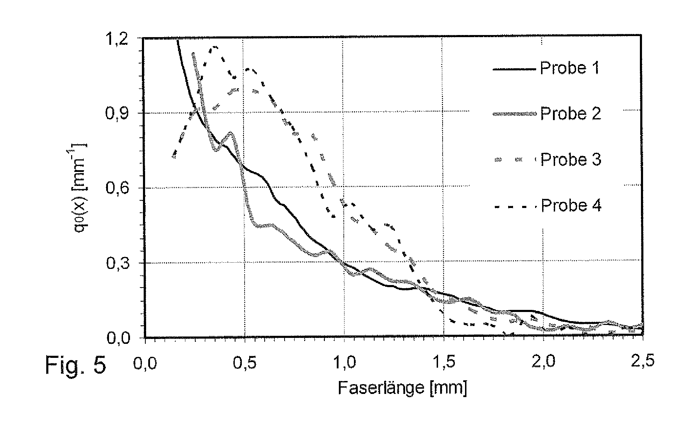

Weiters wurde der erfindungsgemäße Zuschlagstoff mit dem Analysegerät MORFI charakterisiert. In Fig. 4 und Fig. 5 sind die ermittelten Werte für den Faserdurchmesser und die Faserlänge dargestellt. Die Werte für die mittlere Länge betragen 654 μm (längengewichtet) bzw. 432 μm (anzahlgewichtet). Als mittlerer Faserdurchmesser wurde ein Wert von 20,4 μm erhalten. Der hergestellte Zuschlagstoff zeichnete sich durch eine gute Rieselfähigkeit aus.

Beispiel 2 (Herstellung eines erfindungsgemäßen Kunststoffgebundenen Formteiles)

Der erfindungsgemäße Zuschlagstoff wurde durch mechanische Bearbeitung mittels Stachelwalzen nochmals aufgelockert. In einem ersten Schritt wurden die Fasern mit dem Bindemittel Melamin-Harnstoff-Formaldehydharze (MUF) bestäubt, wobei eine Einstoffdüse bei einem Druck von 280 bar eingesetzt wurde. Die Formgebung erfolgte durch Heißpressen bei 220˚C, wobei Platten in einer Stärke von 10 mm hergestellt wurden.

Die erzielten Dichten lagen zwischen 480 kg/m$^3$ und 500 kg/m$^3$, der Beleimungsgrad betrug 12% bzw. 20%. Die erreichten Biegefestigkeiten lagen zwischen 0,002 N/mm$^2$ und 0,005 N/mm$^2$, die Biege-E-Moduli lagen im Bereich von 200 N/mm$^2$ bis 500 N/mm$^2$. Diese Werte sind wesentlich höher als bei konventionellen, mit Lignozellulosefasern, hergestellten Platten, insbesondere wenn man die wesentlich geringere Dichte berücksichtigt. Ein weiterer Vorteil der Platten liegt in der hohen Unempfindlichkeit gegenüber Wasser, wodurch auch ein Einsatz in Feuchträumen und im Außenbereich möglich ist.

Beispiel 3 (Herstellung eines erfindungsgemäßen kunststoffgebundenen Formteiles)

Im folgenden Fall wurde eine handelsübliche Qualität von Polypropylen mit dem erfindungsgemäßen Zuschlagstoff mittels Spritzguss zu Probekörpern verarbeitet. Tabelle 13 zeigt die wichtigsten mechanischen Kenndaten in Abhängigkeit der Konzentration des erfindungsgemäßen Zuschlagsstoffs.

Es zeigt sich, dass Zug- und Biegefestigkeit sowie die entsprechenden Moduli deutlich ansteigen. Wie bei faserverstärktem Polypropylen üblich, sinkt die Schlagzähigkeit. Die Resultate beweisen, dass der erfindungsgemäße Zuschlagsstoff vorteilhaft zur Verstärkung von Polypropylen oder auch anderen Kunststoffen eingesetzt werden kann.

Die Herstellung der Formteile erfolgt erfindungsgemäß beispielsweise in der Form, dass der Zuschlagstoff mit einem Kunststoffgranulat vermischt wird und danach bei hohem Druck und einer über dem Schmelzpunkt des Kunststoffs liegenden Temperatur Formteile gepresst werden.

Tabelle 13. Verbesserung der Produkteigenschaften von Polypropylen durch Zusatz von erfindungsgemäßem Zuschlagsstoff.

| | Anteil erfindungsgem. Zuschlagstoff [Massen %] | | | | |
|---|---|---|---|---|---|
| | 0 | 20 | 25 | 30 | 40 |
| Zugfestigkeit [MPa] | 21,6 | 22,3 | 23,4 | 35,1 | 42,1 |
| Zug-E-Modul [MPa] | 2286 | 2303 | 2491 | 44181,7 | 4896 |
| Biegefestigkeit [N/mm$^2$] | 39,8 | 41,8 | 42,6 | 51,3 | 57,8 |
| Biege E-Modul [N/mm$^2$] | 1765 | 1888 | 2173 | 3805,9 | 4223 |
| Schlagzähigkeit (7,5 J) [kJ/m$^2$] | 25,3 | 23,6 | 22,2 | 15 | 13,5 |

In Anwendung des erfindungsgemäßen Verfahrens können beispielsweise Faserverbundplatten bestehend aus 88% Fasern und 12% Harz hergestellt werden, indem die Fasern mit dem Harz benetzt werden und in einer Presse mit der Dimension 45 x 45 cm zunächst auf eine Höhe von 10 mm verdichtet werden. Die Dichte der Platte betrug 500 kg/m$^3$, wobei die Platte bei 220˚C für 110 Sekunden gepresst wurde. Das Ergebnis ist eine sehr homogene, leichte aber kompakte Faserverbundplatte. Das Quellverhalten bei 24-stündigem Test betrug weniger als 10%.

Als Variante zum obigen Herstellungsverfahren wurde bei einem weiteren Versuch das Fasermaterial mit LPDE-Pulver vermischt, wobei die Zugabemenge 10% betrug. Auf Grund des niedrigeren Schmelzpunkts von LPDE wurde bei 140˚C für 60 Sekunden gepresst. In analoger Weise lassen sich auch Formteile herstellen, wie etwa Gehäuse von Geräten oder dergleichen. Gegebenenfalls werden weitere Bindemittel oder Zuschlagstoffe zugeführt.

Weiters ist es auch möglich, auf die oben beschriebene Art weiche Vliese herzustellen. Hier wird mittels einer Zugabe Bikofasern wie etwa Lyocell oder einem Gemisch von 10% Polypropylen und Polyethylenfasern bei geringem Druck und geringer Temperatur das Fasergemisch auf einer kontinuierlichen Presse erwärmt, so dass es durch die Schmelze der Fasern zu einer weichen Struktur kommt.

Die vorliegende Erfindung ermöglicht es durch Variation der Verfahrensparameter Werkstücke mit unterschiedlichen Eigenschaften zu erzielen.

**Patentansprüche**

1. Zuschlagstoff für die Herstellung von Baumaterialien, insbesondere von von Kunststoff-gebundenen Formteilen, enthaltend zumindest eine faserhaltige Altstofffraktion, **dadurch gekennzeichnet, dass** die zumindest eine Altstofffraktion ein Massenverhältnis von hydrophoben zu hydrophilen Textilfasern von 1:4 bis 4:1, vorzugsweise 1:3 bis 2:1 aufweist.

2. Zuschlagstoff nach Anspruch 1, **dadurch gekennzeichnet, dass** das Wasserrückhaltevermögen WRV der Textilfasern in einem Bereich zwischen 5% und 100%, vorzugsweise zwischen 10% und 70% liegt.

3. Zuschlagstoff nach Anspruch 1, **dadurch gekennzeichnet, dass** das die Standardabweichung des nach Masseanteilen gewichteten Wasserrückhaltevermögens WRV der Textilfasern über 12%, vorzugsweise über 22% liegt.

4. Zuschlagstoff nach einem der Ansprüche 1 bis 3, **dadurch gekennzeichnet, dass** die längengewichtete mittlere Faserlänge der Textilfasern unter 10 mm, vorzugsweise unter 5 mm, besonders vorzugsweise unter 2 mm beträgt.

5. Kunststoff-gebundener Formteil, mit einer Kunststoff-Matrix und einem darin eingebetteten Zuschlagstoff, **dadurch gekennzeichnet, dass** der Zuschlagstoff nach einem der Ansprüche 1 bis 4 ausgebildet ist.

6. Kunststoff-gebundener Formteil nach Anspruch 5, **dadurch gekennzeichnet, dass** als Matrixmaterial Polyethylen vorgesehen ist.

7. Kunststoff-gebundener Formteil nach Anspruch 6, **dadurch gekennzeichnet, dass** als Matrixmaterial zumindest teilweise LDPE (low density Polyethylene) vorgesehen ist

8. Verfahren zur Herstellung eines Zuschlagstoffes für die Herstellung von Baumaterialien, insbesondere von von Kunststoff-gebundenen Formteilen, mit einem Ausgangsmaterial, das zumindest eine faserhaltige Altstofffraktion enthält, wobei das Ausgangsmaterial zerkleinert und mit einem feinkörnigen Zusatzmaterial vermengt wird, um einen im Wesentlichen rieselfähigen Zuschlagstoff zu erhalten, **dadurch gekennzeichnet, dass** als Ausgangsmaterial eine Schredderfraktion verwendet wird, deren Zusammensetzung ein Verhältnis von hydrophoben zu hydrophilen Textilfasern von 1:4 bis 4:1, vorzugsweise 1:3 bis 2:1 aufweist.

9. Verfahren nach Anspruch 8, **dadurch gekennzeichnet, dass** die Schredderfraktion durch Grobzerkleinerung von Textilabfällen, anschließender Abtrennung und darauf folgendem Feinschneiden erhalten wird.

10. Verfahren nach Anspruch 9, **dadurch gekennzeichnet, dass** die Abtrennung mittels Wirbelstrom oder Sichten erfolgt.

11. Verfahren nach Anspruch 9 oder 10, **dadurch gekennzeichnet, dass** die Feinschneidung in einer Feinschneidmühle erfolgt.

12. Verfahren nach einem der Ansprüche 8 bis 11, **dadurch gekennzeichnet, dass** sämtliche Verfahrensschritte trocken, ohne den Zusatz von Flüssigkeiten während der Herstellung des Zuschlagstoffes durchgeführt werden.

13. Verfahren nach einem der Ansprüche 8 bis 12, **dadurch gekennzeichnet, dass** mehrere Faserfraktionen bereitgestellt werden, für jede Fraktion das Verhältnis von hydrophoben zu hydrophilen Textilfasern durch Analyse der Fasern bestimmt wird und ein gewünschtes Verhältnis durch Mischung der Faserfraktionen eingestellt wird.

14. Verfahren nach Anspruch 13, **dadurch gekennzeichnet, dass** neben der Analyse ein weiterer Parameter jeder Faserfraktion bestimmt wird, der die Affinität zu Wasser ausdrückt, und dass dieser Parameter als Korrekturgröße für die Einstellung des Mischungsverhältnisses berücksichtigt wird.

15. Verfahren nach einem der Ansprüche 8 bis 14, **dadurch gekennzeichnet, dass** der Zuschlagstoff mit einem Kunststoffgranulat vermischt wird und danach bei hohem Druck und einer über dem Schmelzpunkt des Kunststoffs liegenden Temperatur Formteile gepresst werden.

Fig. 1

Fig. 2

# Fig. 3

Fig. 4

Fig. 5

Europäisches Patentamt
European Patent Office
Office européen des brevets

**EUROPÄISCHER RECHERCHENBERICHT**

Nummer der Anmeldung

EP 10 19 2044

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2008/066751 A1 (MATERIAL INNOVATIONS LLC [US]; MANCOSH DOUGLAS [US]; PRZYBYLINSKI JAME) 5. Juni 2008 (2008-06-05) * Seite 35, Zeile 5 - Zeile 9; Ansprüche 1-5; Beispiel 3 * ----- | 1-15 | INV. C04B16/06 C04B20/00 E04C2/16 |
| A | GB 1 089 442 A (BUILDING RES HOLDING LTD) 1. November 1967 (1967-11-01) * das ganze Dokument * ----- | 1-15 | |

| RECHERCHIERTE SACHGEBIETE (IPC) |
|---|
| D01F C04B E04C B29B |

Der vorliegende Recherchenbericht wurde für alle Patentansprüche erstellt

| Recherchenort | Abschlußdatum der Recherche | Prüfer |
|---|---|---|
| München | 8. Februar 2011 | Lux, Rudolf |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
............................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 10 19 2044

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-02-2011

| Im Recherchenbericht angeführtes Patentdokument | Datum der Veröffentlichung | Mitglied(er) der Patentfamilie | Datum der Veröffentlichung |
|---|---|---|---|
| WO 2008066751 A1 | 05-06-2008 | CA 2670351 A1<br>EP 2114648 A1<br>US 2008128933 A1 | 05-06-2008<br>11-11-2009<br>05-06-2008 |
| GB 1089442 A | 01-11-1967 | AT 254025 B<br>BE 662848 A | 10-05-1967<br>17-08-1965 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- US 7386919 B2
- GB 2453656 A
- DE 10107541 C1
- AT 254025
- DE 3816894 A1
- DE 29715423 U1
- DE 29605878 U1
- DE 19714348 C2
- DD 145772 A
- DE 4141524 C1
- US 5369861 A
- US 547172 A
- US 5919717 A

**In der Beschreibung aufgeführte Nicht-Patentliteratur**

- **M. Tasedemir ; D. Kocak ; I. Usta ; M. Akalin ; N. Merdan.** Properties of recycled polycarbonate/waste silk and cotton fiber polymer composites. *International Journal of Polymeric Materials,* 2008, vol. 57/8, 797-805